# EUROPEAN PATENT APPLICATION

(11) **EP 2 808 670 A2**
(43) Date of publication of application: **03.12.2014**
(21) Application number: 14169870.4
(22) Date of filing: 26.05.2014
(51) Int. Cl.: G01N 21/55, B60S 1/08

(54) **Attached matter detector, wiper device, and mobile body**

(30) Priority: 30.05.2013 JP 2013113848; 24.03.2014 JP 2014060485
(71) Applicant: Ricoh Company, Ltd., Tokyo 143-8555 (JP)
(72) Inventor: SATOH, Hiroyuki, Tokyo, 143-8555 (JP)
(74) Representative: Schwabe - Sandmair - Marx

(57) **Abstract**

An attached matter detector (10) includes a plurality of light-emitting elements (11A to 11H, 41 A to 41D) which are aligned linearly and emit light; a plurality of collimator lenses (12A to 12H) which are aligned linearly corresponding to the light-emitting elements (11A to 11H, 41A to 41D), respectively, and collimate the light emitted from the light-emitting elements (11A to 11H, 41A to 41D) as collimated light (L), and emit the collimated light through one surface (17A) of a transparent plate member (17) to the other surface (17B) of the transparent plate member (17); one light-receiving element (15) which receives reflected light (L') from the other surface (17B) of the transparent plate member (17); and an attached matter determiner (16) which determines whether attached matter (S) is attached to the other surface of the transparent plate member (17) or not from the reflected light (L') received by the light-receiving element (15).

## Description

The present invention relates to an attached matter detector which detects attached matter on a surface such as a glass surface, or the like, a wiper device which includes the attached matter detector, and a mobile body which includes the wiper device.

Conventionally, in an automobile, or the like, a raindrop detector which detects raindrops attached to an outer surface of a windscreen is known. The raindrop detector is placed on an inner side of the windscreen as a transparent plate member, and when detecting raindrops attached to an outer surface of the windscreen, the raindrop detector sends a raindrop detection signal to a wiper device. The wiper device drives a wiper body, wipes the outer surface of the windscreen, and removes the raindrops.

As such a raindrop detector, a raindrop detector which includes plural pairs of light-emitting elements and light-receiving elements, and outputs a wiper-driving signal by a lowering rate of light receiving quantity for light emitting quantity has been proposed. (For example, see Japanese Patent Application Publication No. 2002-283968)

In the raindrop detector disclosed in Japanese Patent Application Publication No. 2002-283968, a raindrop state is decided by a single lowering rate for each single detection area and a total lowering rate to be the total.

However, since the raindrop detector disclosed in Japanese Patent Application Publication No. 2002-283968 includes the plural pairs of light-emitting elements and light-receiving elements, its structure is complex and costly. Additionally, it is difficult to illuminate an entire raindrop detection range uniformly, and detect raindrops accurately and reliably.

An object of the present invention is to provide an attached matter detector which detects the presence or absence of attached matter accurately and reliably, when attached matter such as raindrops or the like is attached, by illuminating an entire attached matter detection range uniformly.

In order to achieve the above object, an embodiment of the present invention provides: an attached matter detector, comprising: a plurality of light-emitting elements which are aligned linearly and emit light; a plurality of collimator lenses which are aligned linearly corresponding to the light-emitting elements, respectively, and collimate the light emitted from the light-emitting elements as collimated light, and emit the collimated light through one surface of a transparent plate member to the other surface of the transparent plate member; one light-receiving element which receives reflected light from the other surface of the transparent plate member; and an attached matter determiner which determines whether attached matter is attached to the other surface of the transparent plate member or not from the reflected light received by the light-receiving element, wherein at least a light-emitting element which is at an end of the light-emitting elements is shifted along a direction of alignment of the light-emitting elements, or at least a collimator lens which is at an end of the collimator lenses is shifted along a direction of alignment of the collimator lenses.
FIG. 1 is a diagram of an entire structure of a raindrop detector according to Example 1.
FIG. 2 is a diagram of an essential part of the raindrop detector as viewed from below and illustrates a positional relationship among an LED (Light-Emitting Diode) unit, a collimator lens array, a windscreen, a condensing lens, and a CMOS (Complementary Metal-Oxide Semiconductor) in a simplified manner.
FIG. 3 is a perspective diagram of an integrally-molded collimator lens array.
FIG. 4 is an enlarged diagram illustrating a state where collimator lenses are shifted with respect to LEDs and arranged.
FIG. 5 is a diagram illustrating a relationship between a lens shift amount and an exit angle.
FIG. 6 is a diagram schematically illustrating a positional relationship among a plurality of LEDs, a plurality of collimator lenses, a condensing lens, and a CMOS.
FIG. 7A is a diagram illustrating illuminance distribution on the CMOS of a raindrop detector in the present example. FIG. 7B is a diagram in which the illuminance distribution in FIG. 7A is illustrated as a graph.
FIG. 8A is a diagram illustrating illuminance distribution on a CMOS of a conventional raindrop detector. FIG. 8B is a diagram in which the illuminance distribution in FIG. 8A is illustrated as a graph.
FIG. 9 is a diagram illustrating a relationship between luminance distribution in a detection area and the number of raindrop detection signals, and illustrates a result obtained by the raindrop detector in the present example.
FIG. 10 is a diagram illustrating a relationship between luminance distribution in a detection area and the number of raindrop detection signals, and illustrates a result obtained by the conventional raindrop detector.
FIG. 11 illustrates a raindrop detector according to Example 2, and schematically illustrates a positional relationship among a plurality of LEDs, a plurality of collimator lenses, a condensing lens, and a CMOS.
FIG. 12 is a diagram explaining a case where reflected light includes sunlight in the raindrop detector in the present example.
FIG. 13 is a diagram illustrating a relationship between a wavelength of light and a transmittance of light in a light-guiding path.
FIG. 14 is a diagram of a structure of a chief part of a raindrop detector according to Example 3.
Each of FIGs. 15A to 15C illustrates a case where each microlens is in a hemispherical shape. FIGs. 15A to 15C illustrate a front view, a top view, and a side view of the microlens, respectively.
Each of FIGs. 16A to 16C illustrates a case where each microlens is in a semi-ellipsoidal shape. FIGs. 16A to 16C illustrate a front view, a top view, and a side view of the microlens, respectively.
Each of FIGs. 17A to 17C illustrates a case where each microlens is in a semi-cylindrical shape. FIGs. 17A to 17C illustrate a front view, a top view, and a side view of the microlens, respectively.

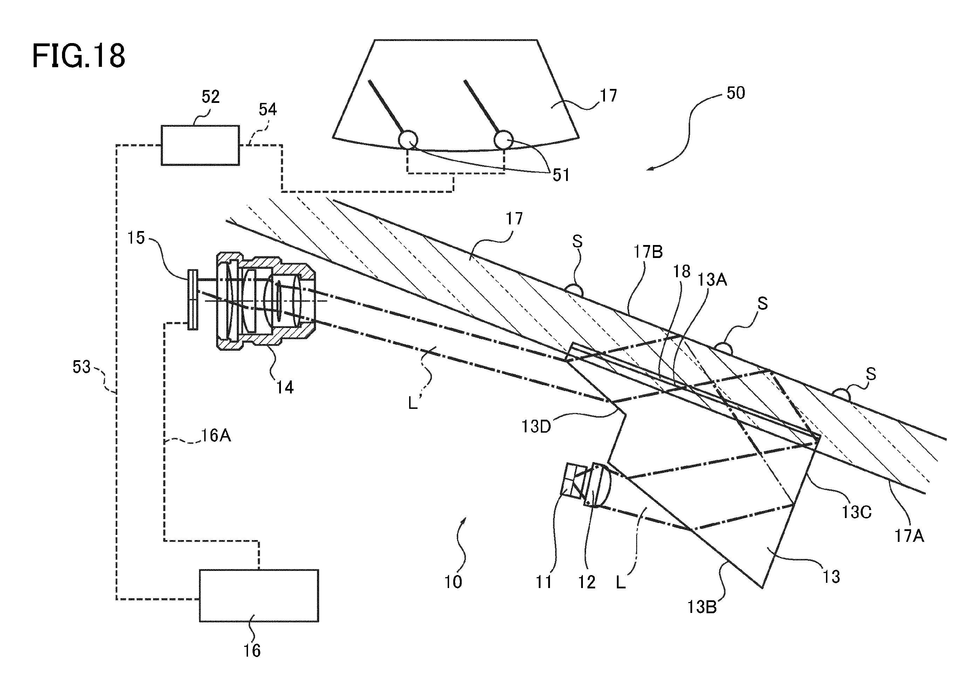

FIG. 18 is a schematic diagram of a structure of a wiper device according to Example 4.

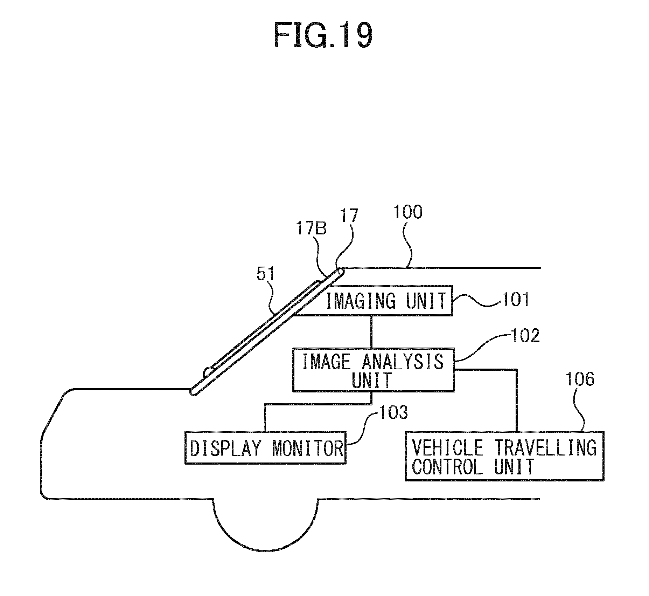

FIG. 19 is a schematic diagram of a structure of a mobile body according to Example 5.

Firstly, a principle structure of an attached matter detector (equivalent to a later-described raindrop detector 10) according to an embodiment of the present invention will be explained.

The attached matter detector includes a plurality of light-emitting elements (equivalent to a later-described plurality of LEDs 11A to 11H, 41A to 41D) which are aligned linearly, and emit light through one surface (equivalent to a later-described inner surface 17A) to the other surface (equivalent to a later-described outer surface 17B) of a transparent plate member (equivalent to a later-described windscreen 17); one light-receiving element (equivalent to a later-described CMOS 15) which receives reflected light (equivalent to a later-described reflected light L') from the other surface of the transparent plate member; and an attached matter determiner (equivalent to a later-described raindrop determiner 16) which determines whether attached matter (equivalent to later-described raindrops S) is attached to the other surface of the transparent plate member or not from the reflected light received by the light-receiving element.

Hereinafter, examples of the present invention will be explained with reference to the drawings.

### [Examples]

### [Example 1]

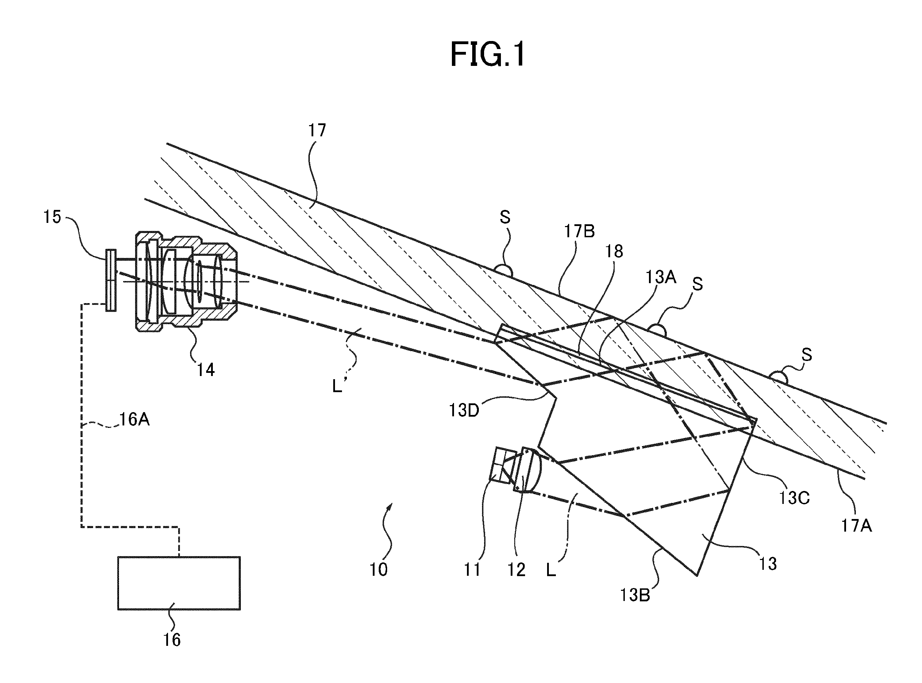

FIG. 1 illustrates an entire structure of an attached matter detector according to Example 1. Here, as an example of an attached matter detector, a raindrop detector will be explained. A raindrop detector 10 detects raindrops S as attached matter which is attached to an outer surface 17B of a windscreen 17 as a transparent plate member. The raindrop detector 10 includes an LED (Light-Emitting Diode) unit 11 as a light-emitting element, a collimator lens array 12, a prism 13, a condensing lens 14, a CMOS (Complementary Metal-Oxide Semiconductor) 15 as a light-receiving element, a raindrop determiner 16 as an attached matter determiner, and a wire 16A. The collimator lens array 12 collimates light emitted from the LED unit 11 as collimated light L, and emits the collimated light L to the windscreen 17 (outer surface 17B) via the prism 13. The CMOS 15 receives reflected light L' of the collimated light L from the outer surface 17B of the windscreen 17 via the condensing lens 14. Note that as a light-receiving element, a CCD (Charge-Coupled Device) can be also used; however, in the following explanations, the light-receiving element is unified as a CMOS.

The raindrop determiner 16 is connected to the CMOS 15 via the wire 16A, and determines whether raindrops S as attached matter are attached to the outer surface 17B of the windscreen 17 or not from the intensity of reflected light L' received by the CMOS 15. That is, if the raindrops S are not attached to the outer surface 17B of the windscreen 17, the collimated light L is totally reflected by the outer surface 17B of the windscreen 17, and therefore, the intensity of the reflected light L' is hardly decreased. However, if the raindrops S are attached to the outer surface 17B of the windscreen 17, the collimated light L is partially refracted at portions of the raindrops S and leaks outside, and the intensity of the reflected light L' is decreased. Therefore, the raindrop determiner 16 detects the raindrops S attached to the outer surface 17B of the windscreen 17 from the intensity of the reflected light L'. In addition to the raindrops S, the attached matter includes a state where the windscreen 17 is frozen, or fogged.

A cross section viewed from the side (a vertical direction on a page in the drawing) of the prism 13 is in a polygonal shape with six angles as an approximately gun shape, and an upper surface 13A of the prism 13 is adhered and fixed on the inner surface 17A of the windscreen 17 with an adhesive agent 18. Note that the prism 13 is formed of synthetic resin.

The light emitted from the LED 11 (infrared light of equal to or more than a wavelength of 800 nm) is collimated by the collimator lens 12, and the collimated light L travels into the prism 13 from a lower inclined surface 13B of the prism 13. At this time, the collimated light L is refracted by the lower inclined surface 13B.

The collimated light L traveling into the prism 13 is totally reflected by a longitudinal rear surface 13C of the prism 13, and then travels into the windscreen 17 via the upper surface 13A of the prism 13. That is, the collimated light L is emitted toward the inner surface 17A of the windscreen 17. Since refractive indexes of the prism 13 and the windscreen 17 are almost the same as each other, at this time, the collimated light L is not refracted by the upper surface 13A of the prism 13. Note that the inner surface 17A and the outer surface 17B of the windscreen 17 are equivalent to one surface and the other surface of the transparent plate member, respectively.

The collimated light L traveling into the windscreen 17 is reflected by the outer surface 17B of the windscreen 17 (in a case nothing is attached to the outer surface 17B of the windscreen 17, the collimated light L is totally reflected by the outer surface 17B of the windscreen 17) and becomes reflected light L', and then, the reflected light L' travels into the prism 13 again via the upper surface 13A of the prism 13. As described above, since the refractive indexes of the prism 13 and the windscreen 17 are almost the same as each other, at this time, the reflected light L' of the collimated light L is not refracted by the upper surface 13A of the prism 13.

The reflected light L' traveling into the prism 13 is emitted outside via an inclined surface 13D of the prism 13. At this time, the reflected light L' emitted outside is guided to the condensing lens 14, and condensed by the condensing lens 14, and then is incident onto a part of the CMOS 15.

Note that in FIG. 1, on the rest of the CMOS onto which the reflected light L' is not incident, it is possible to image a front region via the windscreen 17.

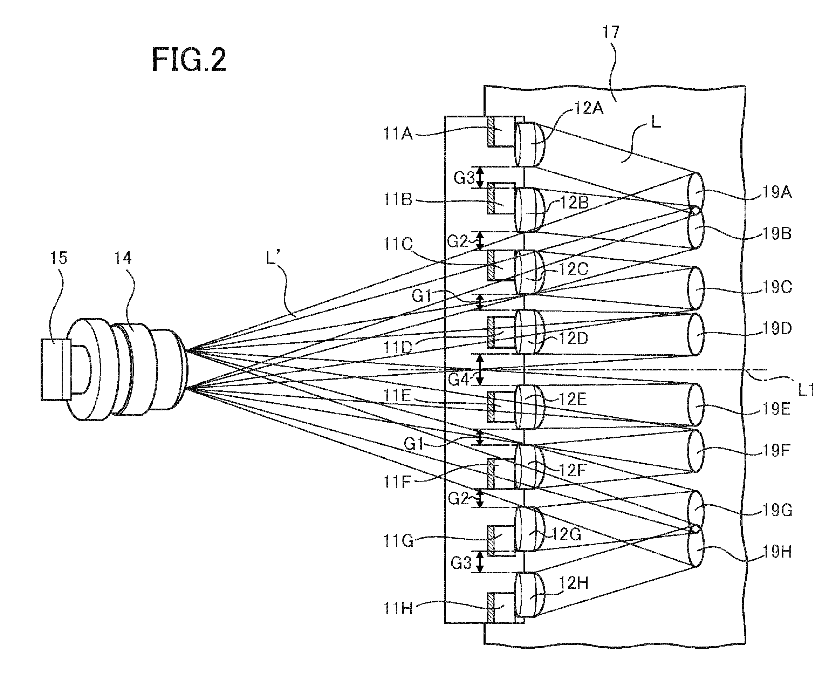

FIG. 2 is a diagram of an essential part of the raindrop detector 10 as viewed from below, and illustrates a positional relationship among the LED unit 11, the collimator lens array 12, the windscreen 17, the condensing lens 14, and the CMOS 15 in a simplified manner. Note that in FIG. 2, the prism 13 is omitted.

In the present example, as illustrated in FIG. 2, the LED unit 11 includes a plurality of LEDs (8 LEDs of LED 11A to 11H), and the plurality of LEDs 11A to 11H are aligned linearly. Thus, in the LED unit 11, the plurality of LEDs 11A to 11H are aligned linearly.

Additionally, the collimator lens array 12 includes a plurality of collimator lenses 12A to 12H corresponding to the plurality of LEDs 11A to 11H, and the collimator lenses 12A to 12H are also aligned linearly. That is, the collimator lens 12A is arranged so as to face the LED 11A, the collimator lens 12B is arranged so as to face the LED 11B, the collimator lens 12C is arranged so as to face the LED 11C, and the collimator lens 12D is arranged so as to face the LED 11D. Further, the collimator lens 12E is arranged so as to face the LED 11E, the collimator lens 12F is arranged so as to face the LED 11F, the collimator lens 12G is arranged so as to face the LED 11G, and the collimator lens 12H is arranged so as to face the LED 11H. Note that each one of the condensing lens 14 and the CMOS 15 is provided.

In the present example, as illustrated in FIG. 2, the LEDs 11A to 11H are aligned at equal intervals; however, the collimator lenses 12A to 12H are not aligned at equal intervals. That is, an interval G1, which is between the collimator lens 12D and the collimator lens 12C, is narrow, and an interval G2, which is between the collimator lens 12C and the collimator lens 12B, is wider than the interval G1. Additionally, an interval G3, which is between the collimator lens 12B and the collimator lens 12A, is wider than the interval G2.

The collimator lenses 12E to 12H are aligned symmetrically in a vertical direction with respect to a center axis L1 in FIG. 2, that is, the collimator lenses 12E to 12H are aligned to be symmetrical to the collimator lenses 12A to 12D. That is, an interval G1, which is between the collimator lens 12E and the collimator lens 12F, is narrow, and an interval G2, which is between the collimator lens 12F and the collimator lens 12G, is wider than the interval G1. Additionally, an interval G3, which is between the collimator lens 12G and the collimator lens 12H, is wider than the interval G2. Note that an interval G4, which is between the collimator lens 12D and the collimator lens 12E, is wider than the interval G3, and widest. That is, a relationship of G1<G2<G3<G4 is established.

As described above, the collimator lenses 12A to 12H are aligned with respect to the LEDs 11A to 11H. Therefore, an optical axis of the collimator lens 12D is slightly shifted with respect to an optical axis of the LED 11D, but approximately coincident with the optical axis of the LED 11D. However, an optical axis of the collimator lens 12C is shifted on a side of the center axis L1 (lower side in FIG. 2) with respect to an optical axis of the LED 11C, and both of the optical axes of the collimator lens 12C and the LED 11C are not coincident with each other. Additionally, an optical axis of the collimator lens 12B is shifted more on the side of the center axis L1 (lower side in FIG. 2) with respect to an optical axis of the LED 11B, and both of the optical axes of the collimator lens 12B and the LED 11B are not coincident with each other. Furthermore, an optical axis of the collimator lens 12A is shifted more on the side of the center axis L1 (lower side in FIG. 2) with respect to an optical axis of the LED 11A, and both of the optical axes of the collimator lens 12A and the LED 11A are not coincident with each other.

That is, the collimator lenses 12A to 12D are shifted along a direction of alignment of the collimator lenses 12A to 12D and toward the center axis L1 (center portion of the collimator lenses 12A to 12H). Additionally, a shift amount of each optical axis of the collimator lenses 12A to 12C with respect to each optical axis of the LEDs 11A to 11C becomes larger in the order of the optical axis of the collimator lens 12C, the optical axis of the collimator lens 12B, and the optical axis of the collimator lens 12A.

Likewise, an optical axis of the collimator lens 12E is slightly shifted with respect to an optical axis of the LED 11E, but approximately coincident with the optical axis of the LED 11E. However, an optical axis of the collimator lens 12F is shifted on the side of the center axis L1 (upper side in FIG. 2) with respect to an optical axis of the LED 11F, and both of the optical axes of the collimator lens 12F and the LED 11F are not coincident with each other. Additionally, an optical axis of the collimator lens 12G is shifted more on the side of the center axis L1 (upper side in FIG. 2) with respect to an optical axis of the LED 11G, and both of the optical axes of the collimator lens 12G and the LED 11G are not coincident with each other. Furthermore, an optical axis of the collimator lens 12H is shifted more on the side of the center axis L1 (upper side in FIG. 2) with respect to an optical axis of the LED 11H, and both of the optical axes of the collimator lens 12H and the LED 11H are not coincident with each other.

That is, the collimator lenses 12E to 12H are shifted along a direction of alignment of the collimator lenses 12E to 12H, and toward the center axis L1 (center portion of the collimator lenses 12A to 12H). Additionally, a shift amount of each optical axis of the collimator lenses 12F to 12H with respect to each optical axis of the LEDs 11F to 11H becomes larger in the order of the optical axis of the collimator lens 12F, the optical axis of the collimator lens 12G, and the optical axis of the collimator lens 12H.

As described above, a shift amount of each of the collimator lenses 12A to 12H increases, as each distance from the center axis L1 increases.

In FIG. 2, reference signs 19A to 19H denote reflecting surfaces on the outer surface 17B of the windscreen 17 of the collimated light L from the collimator lenses 12A to 12H.

Note that in the present example, an example where the collimator lenses 12A to 12H are not aligned at equal intervals is shown; however, even if the collimator lenses 12A to 12H are aligned at equal intervals, it is only necessary to increase a shift amount of each of the collimator lenses 12A to 12H, as each distance from the center axis L1 increases.

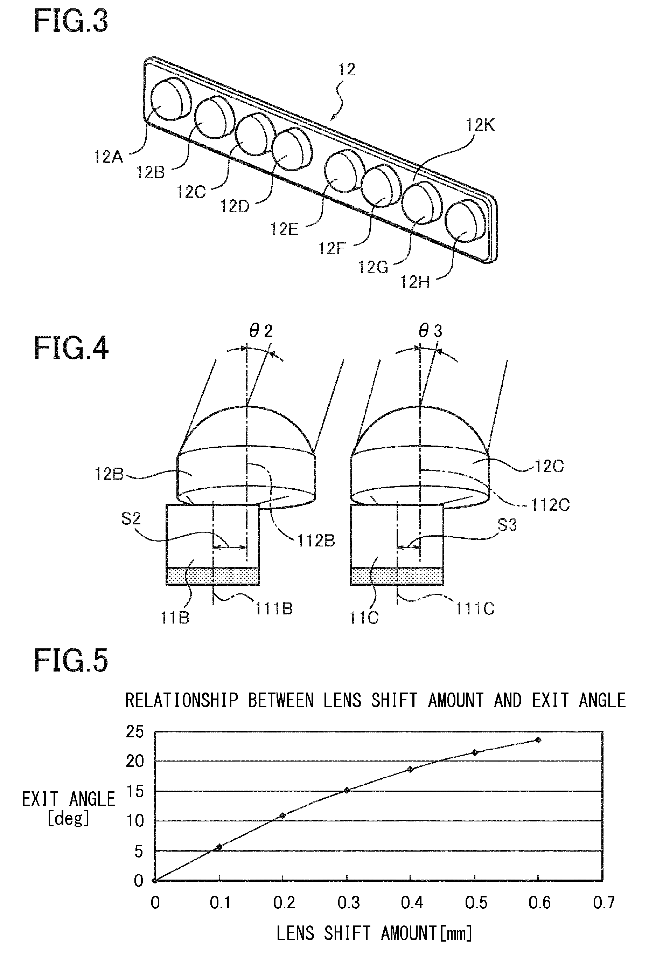

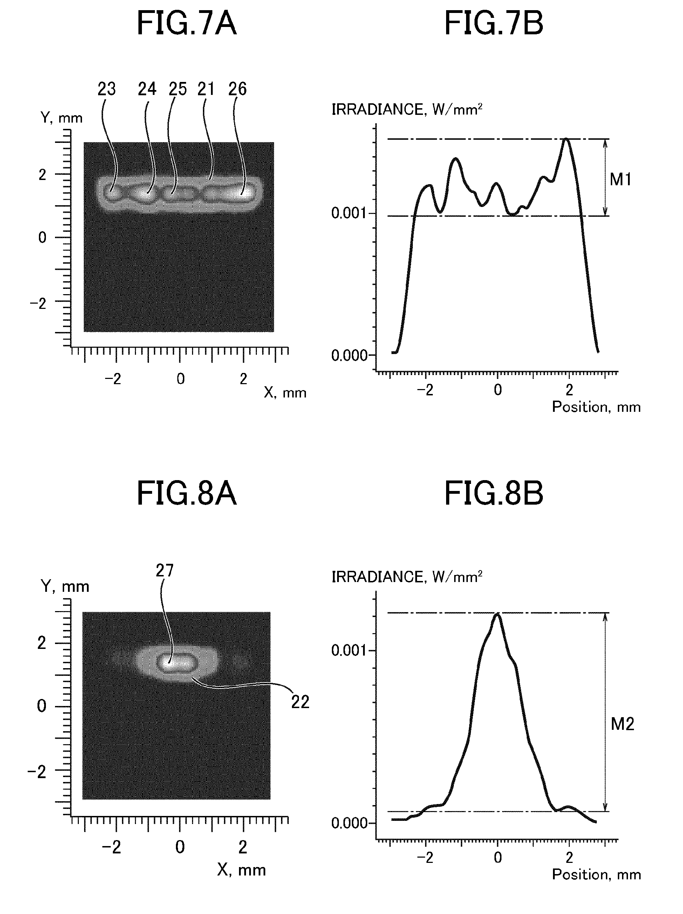

FIG. 3 is a perspective diagram illustrating the collimator lens array 12. In the collimator lens array 12, as illustrated in FIG. 3, 8 collimator lenses 12A to 12H are included, and the collimator lenses 12A to 12H are aligned linearly on a belt-like lens substrate 12K. Each of the collimator lenses 12A to 12H is formed such that one end side is in a small cylindrical shape which protrudes hemispherically (see FIGs. 4 and the like), and the other end side is fixed on the lens substrate 12K. The collimator lenses 12A to 12H and the lens substrate 12K are formed of the same transparent material (for example, glass, synthetic resin, or the like), and integrally molded. Here, as described above, the collimator lenses 12A to 12H constitute the collimator lens array 12.

Additionally, as described above, as the collimator lenses 12A to 12H are closer to either of right and left ends of the lens substrate 12K, an interval between collimator lenses next to each other becomes wider. That is, the interval between the collimator lenses next to each other becomes wider in the order of an interval between the collimator lens 12D and the collimator lens 12C, an interval between the collimator lens 12C and the collimator lens 12B, and an interval between the collimator lens 12B and the collimator lens 12A. Additionally, the interval between the collimator lenses next to each other becomes wider in the order of an interval between the collimator lens 12E and the collimator lens 12F, an interval between the collimator lens 12F and the collimator lens 12G, and an interval between the collimator lens 12G and the collimator lens 12H.

In FIG. 4, an enlarged diagram in which a state where collimator lenses are shifted with respect to LEDs (the collimator lenses 12B and 12C are shifted with respect to the LEDs 11B and 11C, respectively) and aligned is illustrated. In FIG. 4, a positional relationship of the collimator lens 12B with respect to the LED 11B, and a positional relationship of the collimator lens 12C with respect to the LED 11C are illustrated.

With respect to an optical axis 111C of the LED 11C, an optical axis 112C of the collimator lens 12C is shifted on the side of the center axis L1 (see FIG. 2) by a shift amount S3. Additionally, with respect to an optical axis 111B of the LED 11B, an optical axis 112B of the collimator lens 12B is shifted on the side of the center axis L1 (see FIG. 2) by a shift amount S2. Here, the shift amounts are expressed by S2>S3.

In FIG. 4, in a case where a shift amount is small (that is, in a case of the shift amount S3), an exit angle θ3 of the collimator lens 12C is relatively small, and in a case where a shift amount is large (that is, in a case of the shift amount S2), an exit angle θ2 of the collimator lens 12B is relatively large. Thus, in accordance with a shift amount of a collimator lens, an exit angle of the collimator lens changes.

FIG. 5 is a diagram illustrating a relationship between a lens shift amount and an exit angle. As is clear from FIG. 5, as the lens shift amount increases, in accordance with this, the exit angle increases. That is, in a case where the LEDs 11A to 11D are aligned at equal intervals as in FIG. 2, by shifting the collimator lenses 12A to 12D greatly as they are closer to an upper part in the drawing, it is possible to increase an exit angle of each of the collimator lenses 12A to 12D in order. Likewise, in a case where the LEDs 11E to 11H are aligned at equal intervals as in FIG. 2, by shifting the collimator lenses 12E to 12H greatly as they are closer to a lower part in the drawing, it is possible to increase an exit angle of each of the collimator lenses 12E to 12H in order.

Here, if the shift amount is too large, for example, if the collimator lenses 12A to 12H are shifted more than the size of outer diameters of the collimator lenses 12A to 12H, respectively, light from each of the LEDs 11A to 11H is not transmitted, and therefore, there is an upper limit value for the shift amount.

Additionally, the shift amount is determined by a relationship with an incident field angle of the condensing lens 14, and therefore, by shifting each of the collimator lenses 12A to 12H to an angle at which light corresponding to a field angle of the condensing lens 14 is easily incident, it is possible to achieve uniform illuminance distribution on the CMOS 15.

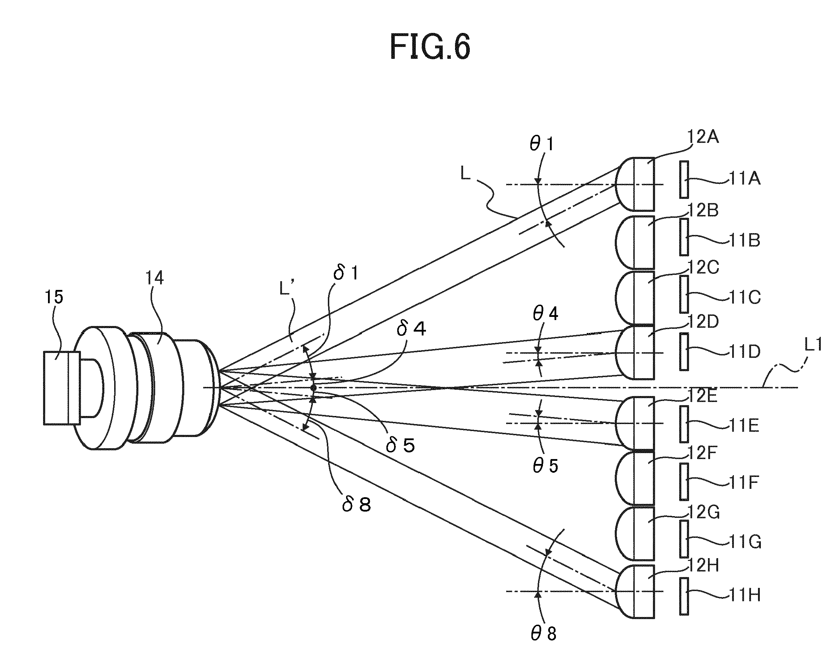

FIG. 6 schematically illustrates a positional relationship among the LEDs 11A to 11H, the collimator lenses 12A to 12H, the condensing lens 14, and the CMOS 15. In FIG. 6, the prism 13 and the windscreen 17 are omitted.

In the present example, as described above, the LEDs 11A to 11H are aligned at equal intervals. The collimator lenses 12A to 12H are aligned to face the LEDs 11A to 11H, respectively. However, the closer to outside (the upper part and the lower part in the drawing) the collimator lenses are, the wider an interval between the collimator lenses next to each other is. That is, the collimator lenses 12A to 12C, and 12E to 12H are shifted toward the center axis L1, and shift amounts of the collimator lenses increase as they are located closer to the outside. The collimator lenses 12D and 12E are hardly shifted.

The light emitted from the LEDs 11A to 11H is collimated by the collimator lenses 12A to 12H, and becomes collimated light L. The collimated light L is totally reflected by the prism 13 and is reflected by the outer surface 17B of the windscreen 17 (in a case where nothing is attached to the outer surface 17B of the windscreen 17, the collimated light L is totally reflected by the outer surface 17B of the windscreen 17), which is not illustrated in FIG. 6, and see FIG. 1, and becomes reflected light L'. The reflected light L' is condensed by the condensing lens 14, and then incident onto the CMOS 15.

Note that in FIG. 6, only the collimated light L from the collimator lenses 12A, 12D, 12E and 12H and the reflected light L' thereof are illustrated; however, collimated light L from the collimator lenses 12B, 12C, 12F, and 12G and the reflected light L' thereof also exist.

In the present example, regarding the collimated light L from the collimator lens 12A, an exit angle θ1 of the collimator lens 12A and a field angle δ1 of the condensing lens 14 are set to be coincident with each other. Additionally, regarding the collimated light L from the collimator lens 12D, an exit angle θ4 of the collimator lens 12D and a field angle δ4 of the condensing lens 14 are set to be coincident with each other. Further, regarding the collimated light L from the collimator lens 12E, an exit angle θ5 of the collimator lens 12E and a field angle δ5 of the condensing lens 14 are set to be coincident with each other, and regarding the collimated light L from the collimator lens 12H, an exit angle θ8 of the collimator lens 12H and a field angle δ8 of the condensing lens 14 are set to be coincident with each other. The same is also applied to collimated light from each of the collimator lenses 12B, 12C, 12F, and 12G, which is not illustrated in FIG. 6.

In the present example, as described above, the exit angles θ1 to θ8 of the collimator lenses 12A to 12H (in FIG. 6, exit angles θ2, θ3, θ6, θ7 are omitted.) and the field angles δ1 to δ8 of the condensing lens 14 (in FIG. 6, field angles δ2, δ3, δ6, δ7 are omitted) are coincident with each other, respectively. Accordingly, in the present example, the collimator lenses 12A to 12H have light distribution corresponding to the field angles of the condensing lens 14, respectively, and it is possible to achieve more efficient and uniform illuminance distribution even in a peripheral portion of the CMOS 15.

FIG. 8A illustrates illuminance distribution on the CMOS in a conventional raindrop detector, and FIG. 8B is a diagram illustrating the illuminance distribution as a graph. In FIG. 8A, a raindrop detection area 22 shows a portion illuminated by the reflected light from the outer surface 17B of the windscreen 17, and the raindrop detection area 22 is formed small only in a center portion in a width direction (a lateral direction in the drawing) on the CMOS.

On the other hand, in FIG. 7A, a raindrop detection area 21 is formed large in the width direction on the CMOS, and therefore, raindrop detection portions 23, 24, 25, and 26 are reliably shown, and a detection threshold value width M1 is small as shown in FIG. 7B. On the contrary, in FIG. 8A, the raindrop detection area 22 is formed small in the width direction on the CMOS, and therefore, one raindrop detection portion 27 is only shown, and a detection threshold value width M2 is large as shown in FIG. 8B. When a detection threshold value width is as small as the detection threshold value width M1 compared to the detection threshold value width M2, the illuminance distribution is uniform, and therefore, it is possible to reliably detect raindrops throughout a wide range. Thus, the illuminance distribution is directly related to a recognition error of the raindrop detection.

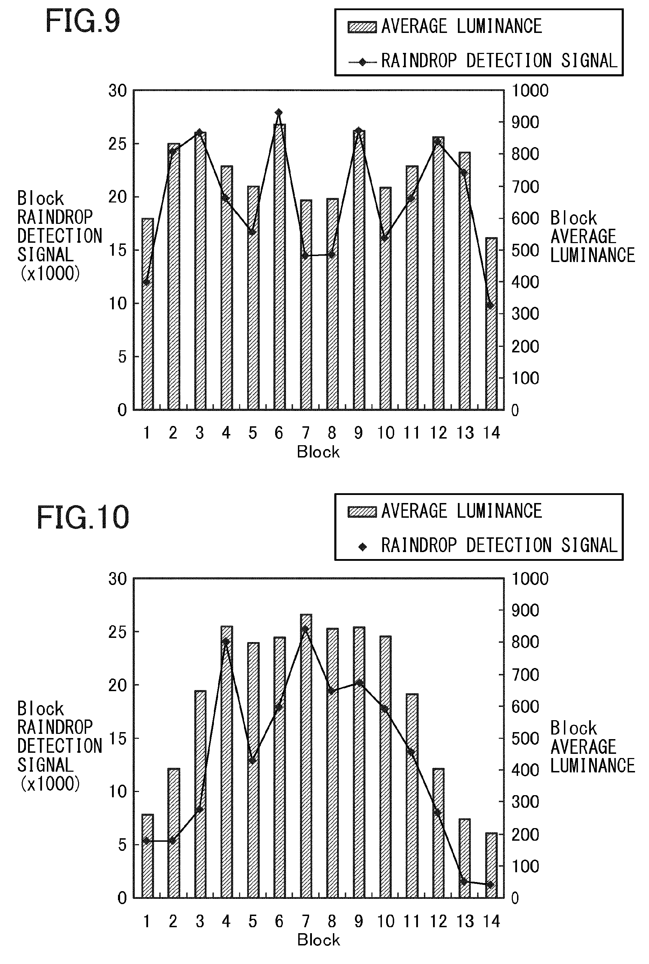

Each of FIG. 9 and FIG. 10 is a diagram which illustrates a relationship between luminance distribution and the number of raindrop detection signals in a raindrop detection area. FIG. 9 illustrates a result obtained by the raindrop detector in the present example, and FIG. 10 illustrates a result obtained by the conventional raindrop detector. In both of FIGs. 9 and 10, a horizontal axis expresses a raindrop detection area, and a vertical axis expresses a luminance value and the number of raindrop detection signals in each raindrop detection area.

In FIG. 9, even in an area closer to a peripheral portion of the raindrop detection area, luminance is hardly decreased, and the number of the raindrop detection signals is also hardly decreased. That is, in a center portion, there are approximately 27,000 raindrop detection signals, and even in the peripheral portion, there are approximately 16,000 raindrop detection signals.

On the other hand, in FIG. 10, in an area closer to a peripheral portion of the raindrop detection area, luminance is decreased, and concurrently the number of the raindrop detection signals is also decreased. That is, in a center portion, there are approximately 26,000 raindrop detection signals, and in the peripheral portion, there are equal to or less than 6,000 raindrop detection signals. For example, when a threshold value of the number of the raindrop detection signals is set to around 8,000, it is not possible to recognize raindrops in the peripheral portion.

According to the present example, the LEDs 11A to 11H are aligned linearly, and therefore, it is possible to illuminate even a periphery of a raindrop detection range uniformly, and detect the presence or absence of raindrops accurately and reliably.

Additionally, by shifting the collimator lenses 12A to 12H greatly on the side of the center axis L1 as they are closer to either end (peripheral edge) of the collimator lens array, it is possible to illuminate even a periphery of a raindrop detection range more uniformly, and detect the presence or absence of raindrops more accurately.

Further, the collimator lenses 12A to 12H have a function of adjusting an angle of light emitted from the LEDs 11A to 11H and luminous intensity distribution, and therefore, variation in performance of light quantity distribution needs to be suppressed. In the present example, the collimator lenses 12A to 12H are integrally molded, and therefore, only by considering accuracy of a mold for collimator lens production and accuracy in variation in assembly with a light-emitting element, it is possible to achieve a collimator lens without variation in performance of the light quantity distribution.

Note that instead of shifting the collimator lenses 12A to 12H, each of the collimator lenses 12A to 12H may be arranged to be inclined such that the light emitted from the LEDs 11A to 11H is collected toward a central portion of the CMOS 15 (a central portion of the condensing lens 14). Also in this case, the collimator lenses 12A to 12H can be formed by integral molding.

Additionally, instead of the collimator lenses 12A to 12H, a single lens which collects the light emitted from the LEDs 11A to 11H toward the central portion of the CMOS 15 (the central portion of the condensing lens 14) may be used.

Additionally, without providing the collimator lenses 12A to 12H, the LEDs 11A to 11H themselves may be inclined such that the light emitted from the LEDs 11A to 11H is collected toward the central portion of the CMOS 15 (the central portion of the condensing lens 14).

In the present example, between the collimator lens array 12 and the condensing lens 14, the prism 13 is provided to form a light-guiding path which guides the reflected light L' from the outer surface 17B of the windscreen 17 to the condensing lens 14.

For example, there is a case where rain falls in a state where the sun shines such as a sunny rain, or the like. In such a case, when the sunlight SL from the sun 31 illuminates the windscreen 17, the sunlight SL is incident onto a CMOS 15, and therefore, even if raindrops are attached to the outer surface 17B of the windscreen 17, it is difficult to detect the raindrops.

Accordingly, the prism 13 is preferably formed of a material which transmits light only having wavelength components of 800 nm to 900 nm.

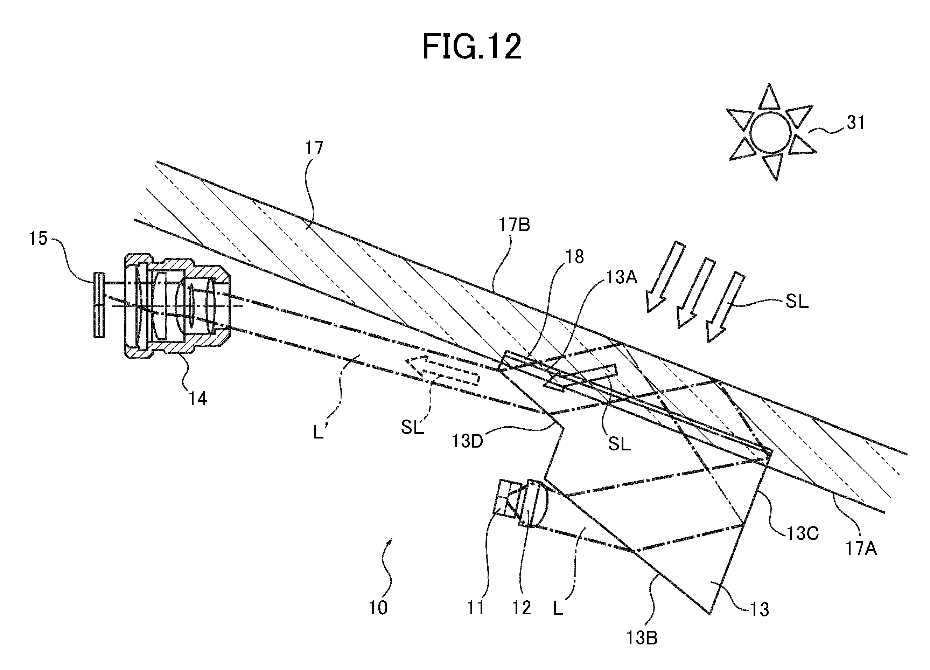

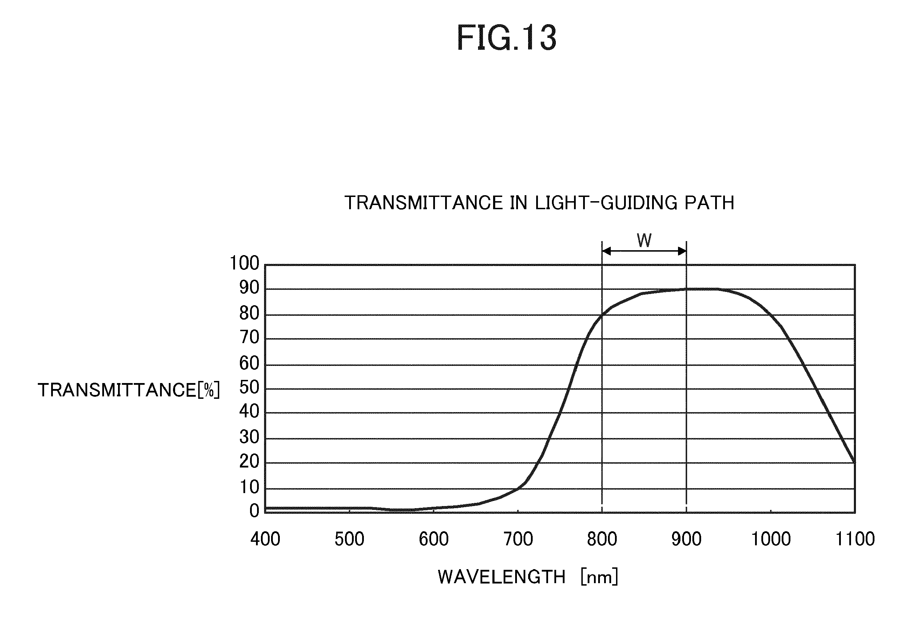

FIG. 13 shows transmittance in the light-guiding path (relationship between wavelength of light and transmittance of light) of the prism 13, and the prism 13 transmits light having wavelength components of 800 nm to 900 nm (a range W in FIG. 13). Therefore, as illustrated in FIG. 12, even if the sunlight SL is included in the reflected light L' from the outer surface 17B of the windscreen 17, the sunlight SL is weakened, and it is possible to prevent the sunlight SL from affecting accuracy of the raindrop detection on the CMOS 15.

Thus, it is possible to keep the raindrop detection range wide, and obtain uniform illuminance distribution on the CMOS 15.

### [Example 2]

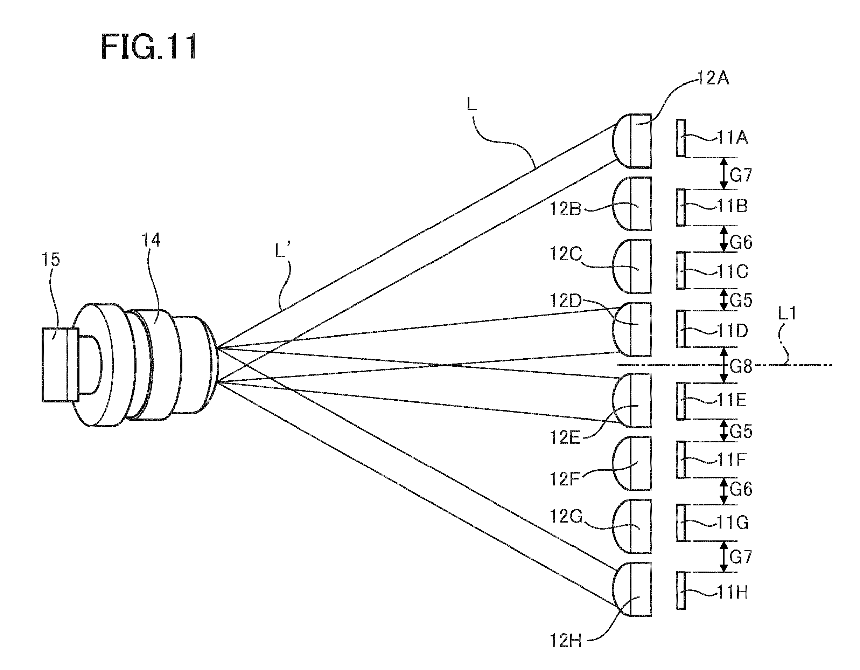

FIG. 11 schematically illustrates a positional relationship among the LEDs 11A to 11H, the collimator lenses 12A to 12H, the condensing lens 14, and the CMOS 15 of an attached matter detector 10 according to Example 2. In FIG. 11, the prism 13 and the windscreen 17 are omitted.

Since the entire structure of the attached matter detector 10 according to Example 2 is approximately similar to that according to Example 1, detailed explanation and drawings are omitted here. However, as illustrated in FIG. 11, unlike Example 1, the collimator lenses 12A to 12H are aligned at equal intervals. The LEDs 11A to 11H are aligned to face the collimator lenses 12A to 12H, respectively; however, as each distance from the center axis L1 increases, an interval between LEDs next to each other becomes wider.

That is, an interval G5, which is between the LED 11D and the LED 11C, is narrow, and an interval G6, which is between the LED 11C and the LED 11B, is wider than the interval G5. And an interval G7, which is between the LED 11B and the LED11A, is wider than the interval G6.

The LEDs 11E to 11H are aligned symmetrically in a vertical direction with respect to the center axis L1, that is, the LEDs 11E to 11H are aligned symmetrical to the LEDs 11A to 11D. That is, an interval G5, which is between the LED 11E and the LED 11F, is narrow, and an interval G6, which is between the LED 11F and 11G, is wider than the interval G5. And an interval G7, which is between the LED 11G and the LED 11H, is wider than the interval G6. Note that an interval G8, which is between the LED 11D and the LED 11E, is wider than the interval G7, and widest. That is, a relationship of G5<G6<G7<G8 is established.

The LED 11D and the LED 11E are not shifted.

Note that also in the present example, the collimator lenses 12A to 12H can be integrally molded.

Light emitted from the LED 11A to 11H is collimated by the collimator lenses 12A to 12H, and becomes collimated light L. The collimated light L is totally reflected by the prism 13 and is reflected by the outer surface 17B of the windscreen 17 (in a case where nothing is attached to the outer surface 17B of the windscreen 17, the collimated light L is totally reflected by the outer surface 17B of the windscreen 17), which is not illustrated in FIG. 11, and see FIG. 1, and becomes reflected light L'. The reflected light L' is condensed by the condensing lens 14, and then incident onto the CMOS 15.

Note that in FIG. 11, only the collimated light L of the collimator lenses 12A, 12D, 12E, and 12H and the reflected light L' thereof are illustrated; however, collimated light L of the collimator lenses 12B, 12C, 12F, and 12G and reflected light L' thereof also exist.

According to the present example, the LEDs 11A to 11H are shifted greatly in a direction away from the center axis L1 as they are closer to either end (peripheral edge) of the LEDs 11A to 11H; and therefore, it is possible to illuminate even a periphery of a raindrop detection range more uniformly, and detect the presence or absence of raindrops more accurately.

### [Example 3]

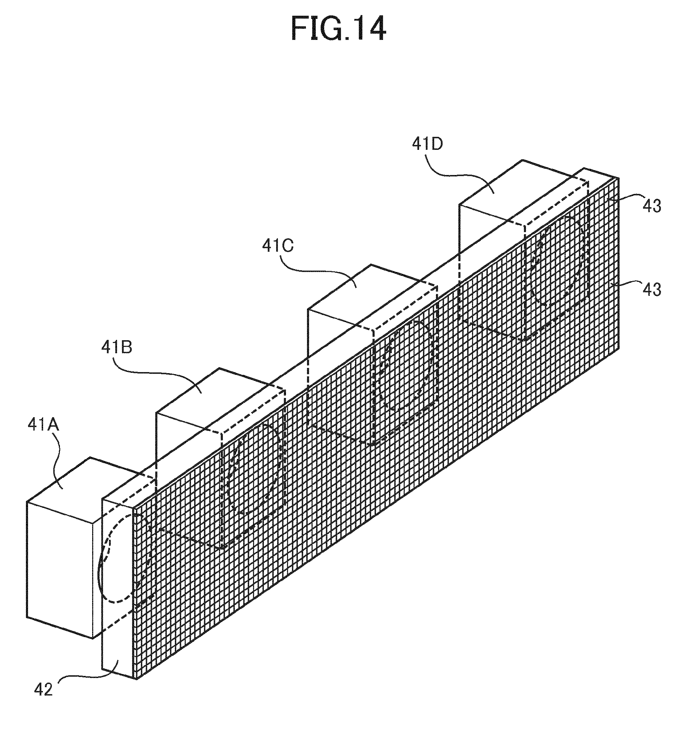

FIG. 14 illustrates LEDs 41A to 41D and a microlens array 42 of an attached matter detector 10 according to Example 3.

Since the entire structure of the attached matter detector 10 according to Example 3 is approximately similar to those according to Examples 1 and 2, detailed explanation and drawings are omitted here. However, as illustrated in FIG. 14, in the attached matter detector 10 according to the present example, instead of the LED 11A to 11H in Examples 1 and 2, the LEDs 41 to 41D as illustrated in FIG. 14 are provided, and instead of the collimator lenses 12A to 12H in Examples 1 and 2, the microlens array 42 is provided.

In the present example, as illustrated in FIG. 14, the LEDs 41A to 41D are aligned linearly, and the planar microlens array 42 is arranged to face the LEDs 41A to 41D. In the microlens array 42, on its surface, a number of microlenses 43 are arranged in a horizontal direction (right-and-left width direction) and a vertical direction (up-and-down direction), that is, in a matrix manner. The microlenses 43 are arranged to have different angles of divergence in the horizontal direction and the vertical direction with respect to light-emitting directions of the LEDs 41A to 41D, respectively.

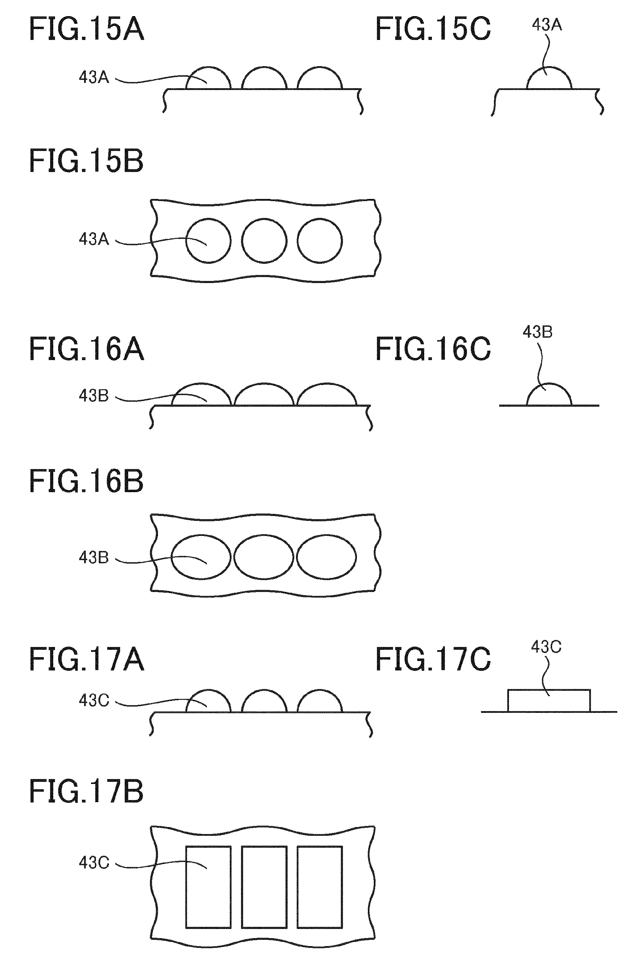

For example, each of the microlenses 43 is formed as illustrated in FIGs. 15A to 17C. In FIG. 15A to 15C, each microlens 43A is formed in a hemispherical shape. In FIGs. 16A to 16C, each microlens 43B is formed in a semi-ellipsoidal shape. In FIGs. 17A to 17C, each microlens 43C is formed in a semi-cylindrical shape. Note that each of FIGs. 15A, 16A, and 17A illustrates a front view, each of FIGs. 15B, 16B, and 17B illustrates a top view, and each of FIGs. 15C, 16C, and 17C illustrates a side view.

Note that considering a condition of an incident angle of reflected light L' incident onto the condensing lens 14, spread angles of light from the LEDs 41A to 41D are not preferably the same, respectively. Accordingly, it is possible to change angles of divergence to be in an oval shape by arranging each of the microlenses 43 of the microlens array 42 to be shifted in the horizontal direction and the vertical direction.

### [Example 4]

FIG. 18 illustrates a wiper device 50 according to Example 4. In the present example, the wiper device 50 includes, in addition to the raindrop detector 10 (that is, any one of the raindrop detectors 10 according to Examples 1 to 3), a wiper body 51 which wipes the outer surface 17B of the windscreen 17, a wiper drive controller 52 which drives the wiper body 51 when raindrops S are attached to the outer surface 17B of the windscreen 17, and wires 53 and 54. The wiper drive controller 52 is connected to the raindrop determiner 16 of the raindrop detector 10 by the wire 53, and is connected to the wiper body 51 by the wire 54.

When the raindrop determiner 16 detects that the raindrops S are attached to the outer surface 17B of the windscreen 17, a signal is sent to the wiper drive controller 52 via the wire 53. When the wiper drive controller 52 receives the signal, the wiper drive controller 52 sends a drive signal via the wire 54 to the wiper body 51, and begins driving the wiper body 51.

Note that the wiper drive controller 52 is connected to the raindrop detector 10.

According to the present example, when the raindrops S are attached to the windscreen 17, the raindrops S are automatically removed by the wiper body 51.

### [Example 5]

FIG. 19 is a schematic diagram of a structure of a mobile body according to Example 5. In the present Example, an automobile 100 as a mobile body is equipped with the wiper device 50 according to Example 5. In FIG. 19, the wiper device 50 is not illustrated in detail.

As illustrated in FIG. 19, the automobile 100 has the windscreen 17 and the wiper device 51 which wipes the outer surface 17B of the windscreen 17. In the automobile 100, an imaging unit 101 which images an upper part of the outer surface 17B of the windscreen 17, and an image analysis unit 102 which performs analysis processing on an image imaged by the imaging unit 101 are provided. The imaging unit 101 and the image analysis unit 102 are equivalent to each of the raindrop detectors 10 according to Examples 1 to 3.

Additionally, in the automobile 100, a display monitor 103 and a vehicle travelling control unit 106 are provided, and each of the display monitor 103 and the vehicle travelling control unit 106 is connected to the image analysis unit 102.

Note that not only the automobile 100, but also ships and airplanes can be equipped with any one of the raindrop detectors 10 according to Examples 1 to 3, and the wiper device 50 according to Example 4.

For example, any one of the raindrop detectors 10 according to Examples 1 to 3, and the wiper device 50 according to Example 4 can be applied to a building or the like having transparent glass, in addition to a mobile body.

According to embodiments of the present invention, since a plurality of light-emitting elements are aligned linearly, it is possible to relatively illuminate even a periphery of an attached matter detection range uniformly, and detect the presence or absence of attached matter accurately and reliably.

Although the present invention has been described in terms of exemplary examples, it is not limited thereto. It should be appreciated that variations may be made in the examples described by persons skilled in the art without departing from the scope of the present invention as defined by the following claims.

## Claims

1. An attached matter detector (10), comprising:
a plurality of light-emitting elements (11A to 11H, 41A to 41D) which are aligned linearly, and emit light through one surface (17A) of a transparent plate member (17) to the other surface (17B) of the transparent plate member (17);
one light-receiving element (15) which receives reflected light (L') from the other surface (17B) of the transparent plate member (17); and
an attached matter determiner (16) which determines whether attached matter (S) is attached to the other surface (17B) of the transparent plate member (17) or not from the reflected light (L') received by the light-receiving element (15).

2. An attached matter detector (10), comprising:
a plurality of light-emitting elements (11A to 11H, 41A to 41D) which are aligned linearly and emit light;
a plurality of collimator lenses (12A to 12H) which are aligned linearly corresponding to the light-emitting elements (11A to 11H, 41A to 41D), respectively, and collimate the light emitted from the light-emitting elements (11 A to 11H, 41A to 41D) as collimated light (L), and emit the collimated light (L) through one surface (17A) of a transparent plate member (17) to the other surface (17B) of the transparent plate member (17);
one light-receiving element (15) which receives reflected light (L') from the other surface (17B) of the transparent plate member (17); and
an attached matter determiner (16) which determines whether attached matter (S) is attached to the other surface (17B) of the transparent plate member (17) or not from the reflected light (L') received by the light-receiving element (15),
wherein at least a light-emitting element of the light-emitting elements (11A to 11H, 41A to 41D) which is at an end of the light-emitting elements (11A to 11H, 41A to 41D) is shifted along a direction of alignment of the light-emitting elements (11A to 11H, 41A to 41D), or at least a collimator lens of the collimator lenses (12A to 12H) which is at an end of the collimator lenses (12A to 12H) is shifted along a direction of alignment of the collimator lenses (12A to 12H).

3. The attached matter detector (10) according to claim 2, comprising:
a condensing lens (14) which condenses the reflected light (L') from the other surface (17B) of the transparent plate member (17),
wherein the collimator lenses (12A to 12H), or the light-emitting elements (11A to 11H, 41H to 41D) are shifted so as to have light distribution corresponding to a field angle of the condensing lens (14).

4. The attached matter detector (10) according to claim 2 or claim 3, wherein the light-emitting elements (11A to 11H, 41A to 41D) are aligned at equal intervals, the collimator lenses (12A to 12H) are shifted with respect to the light-emitting elements (11A to 11H, 41A to 41D), respectively, and as the collimator lenses (12A to 12H) are closer to a peripheral edge of the collimator lenses (12A to 12H), each shift amount is larger.

5. The attached matter detector (10) according to claim 4, wherein the collimator lenses (12A to 12H) are shifted toward a center portion of the collimator lenses (12A to 12H).

6. The attached matter detector (10) according to claim 2 or claim 3, wherein the collimator lenses (12A to 12H) are aligned at equal intervals, the light-emitting elements (11A to 11H, 41A to 41D) are shifted with respect to the collimator lenses (12A to 12H), respectively, and as the light-emitting elements (11A to 11H, 41A to 41D) are closer to a peripheral edge of the light-emitting elements (11A to 11H, 41 A to 4 1 D), each shift amount is larger.

7. The attached matter detector (10) according to claim 6, wherein the light-emitting elements (11A to 11H, 41A to 41D) are shifted toward the peripheral edge of the light-emitting elements (11A to 11H, 41A to 41D).

8. The attached matter detector (10) according to any one of claims 2 to 7, wherein the collimator lenses (12A to 12H) are integrally-molded.

9. The attached matter detector (10) according to claims 3 to 8, wherein a light-guiding path, which guides the reflected light (L') from the other surface (17B) of the transparent plate member (17) to the condensing lens (14), is formed between the collimator lenses (12A to 12H) and the condensing lens (14), and the light-guiding path transmits light having wavelength components of 800 nm to 900 nm.

10. The attached matter detector (10) according to claim 2, wherein a microlens array (42) in which a number of microlenses (43) are aligned in a planar manner is provided instead of the collimator lenses (12A to 12H), and the microlenses (43) are aligned to have different angles of divergence in a horizontal direction and a vertical direction with respect to directions of emission of the light-emitting elements (11A to 11H), respectively.

11. An attached matter detector (10), comprising:
a plurality of light-emitting elements (11A to 11H, 41A to 41D) which are aligned linearly, and emit light through one surface (17A) of a transparent plate member (17) to the other surface (17B) of the transparent plate member (17);
one light-receiving element (15) which receives reflected light (L') from the other surface (17B) of a transparent plate member (17); and
an attached matter determiner (16) which determines whether attached matter (S) is attached to the other surface (17B) of the transparent plate member (17) or not from the reflected light (L') received by the light-receiving element (15),
wherein the light-emitting elements (11A to 11H, 41A to 41D) are arranged to be inclined such that the light emitted from the light-emitting elements (11A to 11H, 41A to 41D) is collected toward a central portion of the light-receiving element (15).

12. An attached matter detector (10), comprising:
a plurality of light-emitting elements (11A to 11H, 41A to 41D) which are aligned linearly, and emit light;
a plurality of collimator lenses (12A to 12H) which are aligned linearly corresponding to the light-emitting elements (11A to 11H, 41A to 41D), respectively, and collimate the light emitted from the light-emitting elements (11 A to 11H, 41A to 41D) as collimated light (L), and emit the collimated light (L) through one surface (17A) of a transparent plate member (17) to the other surface (17B) of the transparent plate member (17);
one light-receiving element (15) which receives reflected light (L') from the other surface (17B) of the transparent plate member (17); and
an attached matter determiner (16) which determines whether attached matter (S) is attached to the other surface (17B) of the transparent plate member (17) or not from the reflected light (L') received by the light-receiving element (15),
wherein each of the collimator lenses (12A to 12H) is arranged to be inclined such that the light emitted from the light-emitting elements (11A to 11H, 41A to 41D) is collected toward a central portion of the light-receiving element (15).

13. An attached matter detector (10), comprising:
a plurality of light-emitting elements (11A to 11H, 41A to 41D) which are aligned linearly, and emit light through one surface (17A) of a transparent plate member (17) to the other surface (17B) of the transparent plate member (17);
one light-receiving element (15) which receives reflected light (L') from the other surface (17B) of the transparent plate member (17);
an attached matter determiner (16) which determines whether attached matter (S) is attached to the other surface (17B) of the transparent plate member (17) or not from the reflected light (L') received by the light-receiving element (15); and
a single lens which collects the light emitted from the light-emitting elements (11A to 11H, 41A to 41D) toward a central portion of the light-receiving element (15).

14. A wiper device (50), comprising:
the attached matter detector (10) according any one of claims 1 to 13;
a wiper body (51) which wipes the other surface (17B) of the transparent plate member (17); and
a wiper drive controller (52) which drives the wiper body (51) when the attached matter (S) is attached to the other surface (17B) of the transparent plate member (17),
wherein the wiper drive controller (52) is connected to the attached matter detector (10) according to any one of claims 1 to 13.

15. A mobile body (100) comprising the wiper device (50) according to claim 14.
